# EUROPÄISCHE PATENTSCHRIFT

(11) **EP 2 199 645 B1**
(45) Veröffentlichungstag und Bekanntmachung des Hinweises auf die Patenterteilung: **15.02.2012**
(21) Anmeldenummer: 08106020.4
(22) Anmeldetag: 19.12.2008
(51) Int. Cl.: F16H 57/04, H01F 1/113

(54) **Beölungsrinne für ein Getriebe sowie Herstellungsverfahren für die Beölungsrinne**
Oiling chamfer for a gear and production method for the oiling chamfer
Rainure de lubrification pour un engrenage et procédé de fabrication de la rainure de lubrification

(43) Veröffentlichungstag der Anmeldung: 23.06.2010
(73) Patentinhaber: Getrag Ford Transmissions GmbH, 50735 Köln (DE)
(72) Erfinder: Bernhardt, Udo, 50259, Pulheim (DE)

(56) Entgegenhaltungen:
- DE-A1- 19 707 615
- FR-A- 2 751 726
- JP-A- 2001 074 126
- KR-A- 20020 044 926

## Beschreibung

Die Erfindung betrifft eine Beölungsrinne für ein Getriebe mit wenigstens einem Ablauf, sowie einem Strömungsabschnitt, welcher dem Ablauf Getriebeöl zuführt. Weiter betrifft die Erfindung ein Kraftfahrzeuggetriebe, sowie Verfahren zur Herstellung einer Beölungsrinne.

Auch heutige Getriebe leiden immer noch unter einer Verschmutzung des Getriebeöls durch Abrieb, Pittings, abbrechende Grate, oder andere Partikel, welche insbesondere von den beweglichen Teilen innerhalb des Getriebes stammen. Diese mit dem Getriebeöl umlaufenden Partikel werden den beweglichen Teilen wiederholt zugeführt, beispielsweise den miteinander kämmenden Zahnrädern des Getriebes. Diese Partikel sorgen für weiteren Verschleiß und damit noch mehr Partikel im Getriebeöl, wodurch der Verschleiß progressiv fortscheitet und damit die Lebensdauer des Getriebes erheblich beeinträchtigt wird.

Derzeit werden Magnete zur Aufnahme metallischer Partikel im Getriebe eingesetzt. Jedoch sind diese Magnete relativ punktförmig und "verpelzen" nach einer gewissen Zeit durch einen Besatz von Spänen, wodurch die Anziehungskraft für weiter entfernt liegende Späne reduziert wird. Die Aufnahmekapazität durch die Magnete ist daher auf Grund der relativ geringen Oberfläche begrenzt. Abgesehen davon eignen sich diese Magnete nicht zur Aufnahme nichtmagnetischer Partikel, beispielsweise Aluminium, Messing, Kohlenstoffpartikel.

Zur Schmierung der beweglichen Teile ist aus dem Stand der Technik, beispielsweise aus der französischen Offenlegungsschrift FR 2751726 bekannt, Beölungsrinnen zu verwenden, welche entweder mittels einer Pumpe zirkuliertes Getriebeöl zu den jeweils beweglichen Teilen leitet, beispielsweise zu miteinander kämmenden Zahnrädern oder Synchronringen, oder derartiges öl auf Spritzflächen gesammelt wird, um das Öl beispielsweise durch Schwerkraft zu den jeweiligen zu schmierenden Teilen zu führen.

Aus der deutschen Offenlegungsschrift DE 19707615 A1 ist darüber hinaus eine elektrostatische Abscheidevorrichtung für magnetische Partikel bekannt, welche von einem Sieb herausgefiltert werden, und weiter von einer elektrostatischen Abscheidevorrichtung parallel zu der Sieboberfläche aus diesem Sieb abgezogen werden, um daraufhin dauerhaft an einem Magnet gebunden zu werden. Jedoch besteht auch hier das Problem, daß nichtmagnetische Partikel mit dieser Vorrichtung nicht dauerhaft gebunden werden, und außerdem die dauerhafte Bindung der magnetischen Partikel an den Magnet ebenfalls das Problem der Verpelzung des Magneten mit sich bringt, das heißt die Aufnahmekapazität des Magneten sehr begrenzt ist.

Die Druckschrift JP 2001074128 A zeigt ein Getriebe mit einer in einem Gehäuseteil angebrachten Bohrung, welche eine Beölungsrinne darstellt. An dieser Beölungsrinne ist ein einzelner, stangenförmiger Magnet angeordnet.

Ferner offenbart das Dokument KR 20020044926 A ein Getriebegehäuse mit einer Beölungsrinne und einem einzelnen, punktförmigen Magneten.

Es ist eine Aufgabe der Erfindung, eine verbesserte Abscheidung von magnetischen Partikeln mit einer hohen Abscheidungs-Kapazität in einem Getriebe zu verwirklichen, wobei die Abscheidung bevorzugt auch nichtmagnetische Partikel umfasst. Es ist weiter eine Aufgabe, ein entsprechendes Getriebe mit einer solchen Beölungsrinne sowie Verfahren zur Herstellung dieser Beölungsrinne zu schaffen.

Erfindungsgemäß wird dies durch eine Beölungsrinne erreicht, die keinen separaten Magneten aufweist, aber zumindest teilweise aus magnetisiertem Material besteht, bzw. durch ein Kraftfahrzeuggetriebe,
welches eine solche Beölungsrinne aufweist. Hergestellt werden kann die Beölungsrinne durch das erfindungsgemäße Verfahren, wonach je nach Ausführungsform entweder die folgenden Verfahrensschritte vorgesehen sind: Bereitstellen eines Kunststoffmaterials; Bereitstellen von magnetisierbaren Partikeln; Vermischen des Kunststoffmaterials und der magnetisierbaren Partikel zu einem spritzgießfähigen Gemisch;
Spritzgießen der Beölungsrinne aus dem Gemisch; und Magnetisieren der Beölungsrinne; oder gemäß einer anderen Ausführungsform die folgenden Verfahrensschritte vorgesehen sind: Herstellung eines Grundkörpers der Beölungsrinne aus einem nicht-magnetisierbaren Material; Beschichteten von wenigstens Teilen der Beölungsrinne mit einem magnetisierbaren Material; und
Magnetisieren des magnetisierbaren Materials.

Gemäß einer alternativen Ausführungsform kann die gesamte Beölungsrinne auch aus Metall hergestellt sein, beispielsweise im Pressverfahren aus einem Blech, woraufhin das Blech dann durchmagnetisiert wird. Auch andere alternative Herstellungsverfahren sind denkbar, beispielsweise Kokillen-Metallguß. Auch wenn bevorzugt wird, die gesamte Beölungsrinne durchzumagnetisieren, wodurch die Aufnahmekapazität für Partikel maximiert wird, kann gemäß einer alternativen Ausführungsform auch vorgesehen sein, daß lediglich Teilbereiche magnetisiert sind. Dies kann beispielsweise dann von Vorteil sein, wenn beabsichtigt ist, Späne nur im gewissen Bereichen der Beölungsrinne aufzunehmen, beispielsweise in strömungsberuhigten Bereichen, während in anderen Bereichen keine Späne aufgenommen werden sollen, beispielsweise um einen möglichst ungehinderten Ölstrom zu verwirklichen.

Gemäß einer besonders bevorzugten Ausführungsform ist die Beölungsrinne aus mit magnetisierbaren Partikeln durchsetztem Kunststoff hergestellt. Dies hat den Vorteil, daß sowohl eine kostengünstige Herstellung, als auch eine robuste Beölungsrinne verwirklicht werden kann. Bevorzugt wird diese Beölungsrinne im Spritzgießverfahren hergestellt und nach dem Giessen magnetisiert. Der besondere Vorteil liegt darin, daß eine ziemlich flexible Formgestaltung der Beölungsrinne möglich ist. Auf Grund von Platzmangel für den Einbau innerhalb des Getriebes und anderen konstruktiven Gegebenheiten ist die Beölungsrinne oft nicht als relativ gerades Teil ausgebildet, sondern hat eine relativ komplizierte Gestalt und einen in Strömungsrichtung mit Kurven versehenen Verlauf. Außerdem sind oft Ansätze, das heißt kleine Abzweigungsrinnen erforderlich, um das Öl zu den zu schmierenden Teilen zu bringen, wobei diese Abzweigungsrinnen bevorzugt an die Haupt-Beölungsrinne angeformt sind. Eine durch Spritzgießen hergestellte Beölungsrinne wird diesen Anforderungen am besten gerecht. Sofern der Einbau eine etwas weniger komplexe Struktur zulässt, kann die Beölungsrinne auch aus einem Blech gepresst werden. Da die Getriebe, in denen die Beölungsrinne zum Einsatz kommt, bevorzugt Kraftfahrzeuggetriebe sind, welche in großen Serien hergestellt werden, rechnet sich der Aufwand für den Formenbau.

Gemäß einer weiteren bevorzugten Ausführungsform kann die Beölungsrinne einen nichtmagnetischen Grundkörper aufweisen, welcher mit einer magnetisierten Beschichtung versehen ist. Viele Arten der Beschichtung sind denkbar, beispielsweise Bedampfung oder Anstrich. Dabei kann das beschichtende Material bereits vor dem Aufbringen magnetisiert sein, oder eine Magnetisierung nach dem Auftragen erfolgen. Ein besonderer Vorteil liegt darin, daß die magnetisierten Teilbereiche der Beölungsrinne bewusst gewählt werden können, um so eine Materialersparnis hinsichtlich der magnetisierten Partikel zu verwirklichen. Eine so verwirklichte partielle Magnetisierung bzw. inhomogene Materialzusammensetzung mit magnetisierbaren Partikeln kann auch im Spritzgießverfahren verwirklicht werden, indem unterschiedliche Werkstoffe durch unterschiedliche Einspritzöffnungen in die Form eingespritzt werden, um so beispielsweise nur im Bereich von strömungsberuhigten Zonen magnetisiertes Material zu haben.

Ebenso kann die Beölungsrinne bevorzugt aus magnetisiertem Metall bestehen. Wie bereits erwähnt, eine gute Massenfertigung kann durch Pressen erreicht werden, allerdings ist der mögliche Formenreichtum etwas begrenzter als im Falle der Herstellung durch Spritzgießen. Ein Vorteil in der Herstellung aus solidem Metallblech liegt darin, daß ein hoher Grad von Magnetisierung erreicht werden kann, das heißt eine hohe magnetische Flussdichte. Alternativ ist es auch möglich, die Beölungsrinne durch Sintern herzustellen, wodurch Materialien mit noch höherer magnetischer Flussdichte verwendet werden können.

Bevorzugt kann die Beölungsrinne mit sich zumindest teilweise quer zur Strömungsrichtung erstreckenden Rillen versehen sein, welche zum Ablagern von nichtmetallischen Partikeln ausgebildet sind. Eine mögliche Variante ist, die gesamte Beölungsrinne wellenförmig auszubilden, das heißt im Längsschnitt ein wellenförmiges Profil zu geben, wobei die Täler des wellenförmigen Profils die Ablagerungsrillen darstellen. Die Rillen stellen strömungsberuhigte Bereiche dar, in welchen sich Partikel dauerhaft Abscheiden können, selbst wenn diese nicht ferromagnetisch sind. Überdies profilieren die Rillen die magnetische Flussdichte, wodurch es zur lokalen Erhöhung der magnetischen Flussdichte kommen kann. Zusätzlich könnte ein elektrostatisches Feld angelegt werden, welches auch nichtmagnetische Partikel anziehen kann.

Gemäß einer bevorzugten Ausführungsform der Beölungsrinne ist diese mit wenigstens einer Tasche versehen, welche zum Ablagern von Partikeln ausgebildet ist. Selbst wenn Rillen alleine eine ausreichende Strömungsberuhigung zur Ablagerung von Partikeln bereitstellen, erzeugen diese Taschen zusätzlich strömungsberuhigte Zonen, in welchen sich die Partikel dauerhaft Abscheiden können. Zusätzlich kann es von Vorteil sein, die Taschen mit sich zumindest teilweise quer zur Strömungsrichtung erstreckenden Rillen zu versehen, welche zum Ablagern von nichtmetallischen Partikeln ausgebildet sind. Anstatt der Rillen können auch andere Vertiefungen, beispielsweise punktförmige Vertiefungen ähnlich der Oberfläche eines Golfballs, vorgesehen sein. Auch wenn sich in Strömungsrichtung erstreckende Vertiefungen bereits einen gewissen Strömungsberuhigungs-Effekt haben, welcher die Abscheidung von Partikeln begünstigt, ist es von Vorteil, wenn sich wenigstens eine Richtungskomponente der Vertiefung quer zur Strömungsrichtung erstreckt, damit abgeschiedene Partikel nach dem Abscheiden nicht wieder leicht herausgewaschen werden können.

Bevorzugt weist die Beölungsrinne eine sich im Wesentlichen parallel zur einer Hauptstromrichtung des Öls entlang des Strömungsleitabschnitt erstreckende Längsachse auf, und die Taschen weisen eine Bodenfläche auf, welche sich ausgehend von einer Öleintrittsseite in einem spitzen Winkel relativ zu der Längsachse erstreckt, und an einer Ölaustrittsseite in einem stumpfen Winkel zur Längsachse erstreckt. Dadurch wird erreicht, daß auf der Eintrittsseite für das Öl ein relativ sanfter Öleinlauf verwirklicht wird, während auf der Ölaustrittsseite eine starke Strömungsberuhigung stattfindet. Dadurch können Partikel leicht in die Taschen hineingelangen, aber schlecht wieder heraus, das heißt werden besser in den Taschen dauerhaft abgeschieden. Es ist jedoch auch möglich, die Taschen in Längsrichtung symmetrisch zu gestalten, das heißt die Öleintrittsseite und die Ölaustrittsseite gleich zu gestalten, nur spiegelverkehrt.

Gemäß einer bevorzugten Ausführungsform erstreckt sich die Bodenfläche an der Ölaustrittsseite im Wesentlichen senkrecht zur Längsachse und wird damit zu einer senkrechten Wand, und die Bodenfläche zwischen der Öleintrittsseite und Ölaustrittsseite weist einen Bodenabschnitt auf, welcher sich im Wesentlichen parallel zu der Längsachse erstreckt. Diese Gestaltung verlängert die Tasche in der Strömungsrichtung, wodurch ein längerer Bodenabschnitt zum Abscheiden von Partikeln bereitgestellt wird. Es ist jedoch auch möglich, keinen solchen langgestreckten Bodenbereich vorzusehen, oder diesen Bodenbereich mehr oder weniger stark im Verhältnis zur Längsachse zu neigen.

Bevorzugt schließen sich an Seiten der Bodenfläche Seitenwände an, welche sich im Wesentlichen senkrecht zur Längsachse erstrecken. Diese Seitenwände begrenzen die Bodenfläche entlang ihrer Kanten, welche sich bevorzugt parallel zur Längsachse der Beölungsrinne erstrecken und damit auch parallel zueinander. Gemäß einer anderen Ausführungsform können die Kanten der Bodenfläche divergieren, das heißt die Taschen werden in Strömungsrichtung breiter, wodurch ein zusätzlicher Strömungsberuhigungs-Effekt eintritt. Die Seitenwände begrenzen die Taschen seitlich, das heißt quer zur Hauptströmungsrichtung des Öls. Die Taschen werden damit in Einbaulage der Beölungsrinne in senkrechter Richtung durch die Bodenfläche begrenzt, das heißt den Bodenflächenabschnitt an der Öleintrittsseite und Ölaustrittsseite und gegebenenfalls einen dazwischen liegenden Bodenabschnitt, und in seitlicher Richtung, das heißt quer zur Hauptströmungsrichtung, durch die Seitenwände begrenzt, während die Tasche in vertikaler Richtung nach oben offen ist, um Öl mit Partikeln einzuleiten.

Bevorzugt erstrecken sich in Einbaulage der Beölungsrinne die Seitenwände im Wesentlichen vertikal, und der Bodenabschnitt im Wesentlichen horizontal. Abgesehen davon, daß die Kanten des Bodenabschnitts in Strömungsrichtung divergieren können, können auch die Seitenwände geneigt sein, beispielsweise in vertikaler Richtung von unten nach oben konvergieren, um im Bereich des Bodens, wo sich die Partikel abscheiden, eine weitere Strömungsberuhigung durch einen verbreiterten Bodenabschnitt zu erzeugen. Die Tasche hätte dann im Querschnitt quer zur Längsachse und damit quer zur Hauptströmungsrichtung des Öls die Form eines nach oben offenen Trapezes mit der längeren Trapezseite als Bodenbereich.

Auch wenn die Beölungsrinne bevorzugt in Kraftfahrzeuggetrieben zum Einsatz kommt, kann diese in jeder Art von Getrieben zum Einsatz kommen, in welchen die beweglichen Teile durch einen Ölumlaufstrom geschmiert werden müssen. Ein besonders bevorzugter Einsatz bei Kfz-Getrieben bietet sich dadurch an, daß bei hoher Leistungsdichte eine lange Lebensdauer gefordert wird, und das Getriebeöl normalerweise nie oder nur einmal kurz nach der Einlaufphase gewechselt wird, und ein Versagen des Getriebes sehr unangenehme Folgen hat, indem das Fahrzeug nicht mehr weiterfahren kann. Andere Getriebe, in welchen die erfindungsgemäße Beölungsrinne besonders von Vorteil ist, sind beispielsweise Getriebe in Werkzeugmaschinen, Getriebe in elektrisch angetriebenen Fahrzeugen wie Lokomotiven, oder beliebige andere Getriebe.

Die Erfindung wird nachfolgend mehr im Detail unter Bezugnahme auf die Zeichnung erläutert. In der Zeichnung zeigen:
Fig. 1 eine erfindungsgemäße Getriebehälfte mit einem ersten Ausführungsbeispiel der erfindungsgemäßen Beölungsrinne in perspektivischer Seitenansicht;
Fig. 2 ein Detail der Getriebehälfte nach Fig. 1 in vergrößerter Ansicht und leicht veränderter Perspektive;
Fig. 3 ein zweites Ausführungsbeispiel der erfindungsgemäßen Beölungsrinne in Seitenansicht;
Fig. 4 ein zweites Ausführungsbeispiel der erfindungsgemäßen Beölungsrinne in perspektivischer Ansicht;
Fig. 5 ein drittes Ausführungsbeispiel der erfindungsgemäßen Beölungsrinne in perspektivischer Seitenansicht; und
Fig. 6 das Ausführungsbeispiel nach Fig. 5 in perspektivischer Draufsicht.

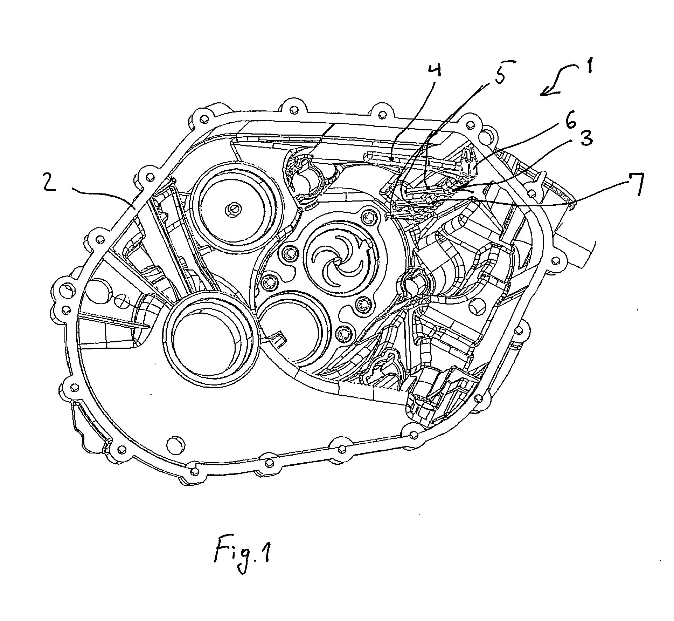

Figur 1 zeigt eine Getriebehälfte 1, welche ein Gehäuse 2 mit darin untergebrachten Getriebeelementen wie beispielsweise Zahnrädern, Wellen, Synchronringen, Kupplungen, Kugellagern oder anderen beweglichen Teilen, welche der Schmierung mit Getriebeöl bedürfen. Zwecks übersichtlicher Darstellung ist ein Großteil dieser beweglichen Getriebeelemente in der Darstellung in Figur 1 weggelassen worden, insbesondere um die Beölungsrinne 3 besser darstellen zu können.

Das in der Figur 1 dargestellte Ausführungsbeispiel der Beölungsrinne weist einen Zulauf 4 sowie drei Abläufe 5 auf. An ihrer Stirnseite 6 ist die Beölungsrinne geschlossen. Die Beölungsrinne 3 weist einen Strömungsleitabschnitt 7 auf, welcher den Zulauf mit den drei Abläufen 5 verbindet. Der Beölungsrinne 3 wird Getriebeöl über den Zulauf zugeführt, und über den Strömungsleitabschnitt zu den drei Abläufen 5 geführt, wobei durch jeden der Abläufe 5 jeweils ein Teilstrom des Getriebeöls abgeführt wird. Gemäß diesem Ausführungsbeispiel werden diese Teilströme über kleine Rinnen, welche sich im Wesentlichen senkrecht zu einer Längsachse des Strömungsleitabschnitt erstrecken, den jeweils zu schmierenden Getriebeelementen zugeführt, beispielsweise Zahnradpaarungen oder Synchronringen. Die Beölungsrinne ist gemäß diesem Ausführungsbeispiel aus einem homogenen Kunststoffmaterial mit darin bereits vor dem Spritzgießen hineingemischten magnetisierbaren Partikeln durch Spritzgießen hergestellt und nach dem Spritzgießvorgang insgesamt durchmagnetisiert worden. Alternativ kann auch nur ein Teil der Beölungsrinne magnetisiert werden, oder soweit spritzgießtechnisch von den Kosten her zu rechtfertigen, nur ein Teil der Beölungsrinne mit darin eingemischten magnetisierbaren Partikeln versehen sein, beispielsweise durch Einspritzen unterschiedlicher Gemische durch unterschiedliche Einspritzöffnungen in der Spritzgußform.

Das Spritzgießverfahren mit in den Kunststoff zumindest teilweise eingemischten magnetisierbaren Partikeln hat den Vorteil, daß auch relativ komplexe Bauteile wie die hier dargestellte Beölungsrinne kostengünstig hergestellt werden können und sehr robust sind, weil beispielsweise keine Beschichtung abblättern kann oder nicht durch Abrasion, beispielsweise auf Grund von im Ölstrom mitgeführten Partikeln, teilweise abgetragen werden kann.

Alternativ ist es jedoch auch möglich, eine Beschichtung an der gesamten Beölungsrinne anzubringen oder an Teilen davon, beispielsweise durch Anstreichen nach dem Spritzgießvorgang, und diese Beschichtung zu magnetisieren. Die teilweise oder vollständige Magnetisierung der Beölungsrinne bewirkt, daß magnetische Partikel, beispielsweise Metallpartikel, welche von den Zahnrädern oder Synchronringen stammen, sich in der Beölungsrinne dauerhaft abscheiden. Selbst wenn einige Partikel sich vielleicht wieder losreißen können und nach einiger Umlaufzeit im Getriebe wohl gegebenenfalls erneut abscheiden, so wird doch zumindest ein wesentlicher Teil der Partikel in der Beölungsrinne dauerhaft gebunden, was insgesamt den Verschleiß der beweglichen Teile minimiert.

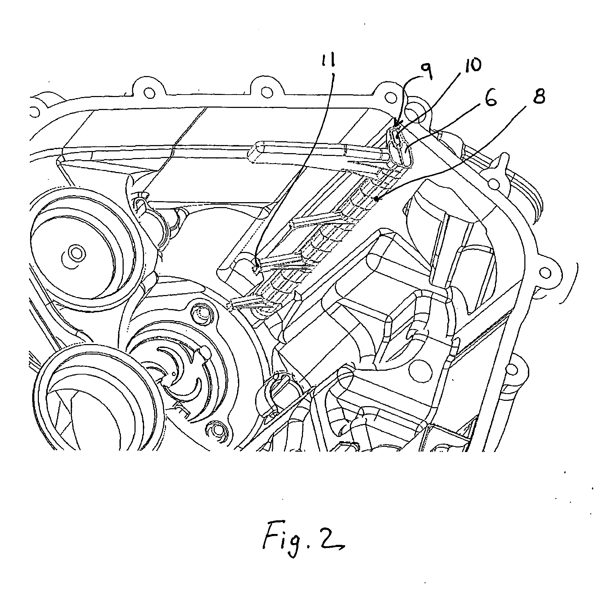

Figur 2 zeigt die Beölungsrinne aus einem etwas anderen Blickwinkel, das heißt mehr von unten betrachtet, sowie in gegenüber Figur 1 vergrößerter Darstellung, wobei jedoch nur ein Teil der Getriebehälfte 1 dargestellt ist. Gleiche Elemente wie in Figur 1 sind auch in Figur 2 mit gleichen Bezugszeichen bezeichnet. Gut zu erkennen sind in dem Strömungsleitabschnitt angebrachte Rillen 8. Eine Vielzahl von derartigen Rillen 8 ist in Strömungsrichtung gesehen im Abstand zueinander vorgesehen, das heißt in Längsrichtung oder Richtung der Längsachse des Strömungsleitabschnitts gesehen, an welchen Rillen 8 sich sowohl magnetische, als auch nicht magnetische Partikel abscheiden können. Im Laufe der Zeit entsteht so eine Art Pelz, welcher auch hilft, weitere Partikel dauerhaft oder zumindest temporär festzuhalten und so aus dem umlaufenden Strom von Getriebeöl durch Abscheidung zu entfernen. Die Rillen sorgen für eine strömungsberuhigte Zone, welche insbesondere hilft, nicht magnetische Partikel abzuscheiden, aber auch magnetische Partikel, weil an den Rillenkanten einerseits eine erhöhte magnetische Flussdichte herrscht, andererseits wie gesagt eine Beruhigung der Strömung erfolgt, wodurch geringere Strömungskräfte auf die Partikel wirken, so daß diese nach dem Abscheiden nicht wieder so leicht losgerissen werden können.

An ihrer Stirnseite 6 ist die Beölungsrinne mit einer Einschnappöse 9 versehen, in welche ein Eingriffsvorsprung 10 einschnappen kann, um die Beölungsrinne so an ihrer Stirnseite formschlüssig festzuhalten. Entsprechende oder andere formschlüssige Eingriffselemente können am gegenüberliegenden Ende der Beölungsrinne, das heißt unmittelbar an oder hinter dem letzten Ablauf in Strömungsrichtung des Öls vorgesehen sein. Wie Figur 2 auch zeigt, weist der mittlere Ablauf eine kleine Ablaufrinne auf, welche in ihrer Mitte mit einer Trennwand 11 getrennt ist. So lässt sich dieser Ablaufstrom in zwei weitere Teilströme unterteilen, wovon beispielsweise ein erster einem Synchronring und ein zweiter einem zugehörigen Zahnradpaar zugeführt werden kann.

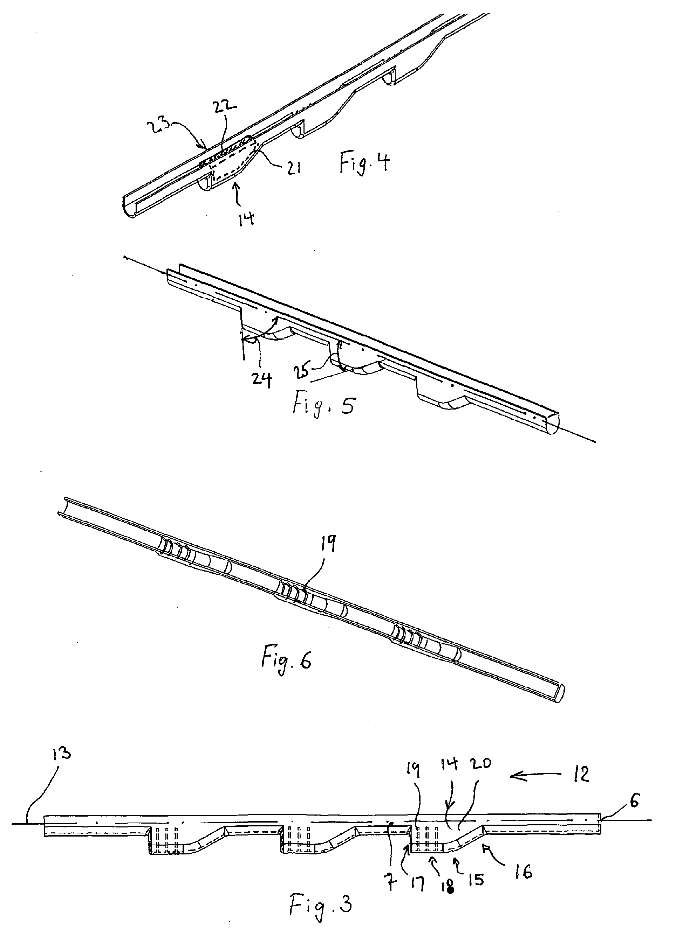

Ein weiteres Ausführungsbeispiel der Beölungsrinne ist in Figur 3 dargestellt. Zwecks besserer Darstellung ist die Beölungsrinne gemäß diesem Ausführungsbeispiel leicht schematisch und perspektivisch von unten gesehen dargestellt. Auch diese Beölungsrinne ist an derjenigen Stirnseite 6 geschlossen, an welcher der Zulauf (hier nicht dargestellt) des Getriebeöls erfolgt. Von dort strömt das Öl in einer Hauptstromrichtung, welche mit Pfeil 12 angedeutet ist, entlang des Strömungsleitabschnittes 7 und damit entlang einer Längsachse 13 des Strömungsleitabschnitts in der mit Pfeil 12 gekennzeichneten Richtung. In Strömungsrichtung sind im Abstand zueinander mehrere Taschen 14 anordnet, welche eine Bodenfläche 15 aufweisen, die an ihrer Öleintrittsseite 16 einen spitzen Winkel relativ zur Längsachse 13 einnimmt und dadurch einen sanften Einlauf für das Öl in die Taschen verwirklicht. An einer Ölaustrittsseite 17 ist in diesem Ausführungsbeispiel die Bodenfläche 15 als eine sich im Wesentlichen senkrecht zur Längsachse 13 erstreckende Wand ausgebildet, das heißt in diesem Grenzfall eine Bodenfläche ohne horizontale Komponente. Noch extremer könnte diese Fläche der Tasche sogar als Hinterschneidung ausgebildet sein. Zwischen der Bodenfläche an der Öleintrittsseite und der Ölaustrittsseite befindet sich ein Bodenabschnitt 18, welcher sich im Wesentlichen parallel zur Längsachse 13 erstreckt, das heißt in Einbaulage der Beölungsrinne im Wesentlichen horizontal erstreckt. In diesem Ausführungsbeispiel sind in jeder Tasche drei Rillen 19 vorgesehen, welche sich quer zur Strömungsrichtung erstrecken und neben dem Festhalten von magnetischen Partikeln auch zum Festhalten von nichtmagnetischen Partikeln dienen. Die Rillen 19 haben eine U-Form, weil diese sowohl in der Bodenfläche 15, als auch in den Seitenwänden 20 ausgebildet sind. Die U-Form ist dadurch definiert, daß diejenigen Rillen, welche in den Seitenwänden 20 ausgebildet sind, die Schenkel des U bilden, während diejenigen Rillen, welche in der Bodenfläche 15 ausgebildet sind, die Basis des U bilden. Die Taschen stellen eine strömungsberuhigte Zone dar, in welcher sich magnetische Partikel wie der Abrieb von den Zahnrädern des Getriebes dauerhaft sammeln können. Sowohl die Form der Taschen 14 mit einem in Strömungsrichtung gesehen sanften Einlauf und einem abrupten Ende, als auch die Rillen 19 sorgen für eine strömungsberuhigte Zone, in welcher sich Partikel dauerhaft Abscheiden können. Gemäß dem in Figur 3 dargestellten Ausführungsbeispiel kann entweder die gesamte Beölungsrinne magnetisiert sein, oder eine Magnetisierung nur im Bereich der Taschen 14 vorgesehen sein. Soweit spritzgießtechnisch sinnvoll zu verwirklichen, kann die Beölungsrinne auch lediglich im Bereich der Taschen 14 aus magnetisierbarem Material hergestellt sein, beispielsweise Kunststoff mit darin eingemischten, magnetisierbaren Partikeln.

In Figur 4 ist ein ähnliches Ausführungsbeispiel wie das in Figur 3 dargestellte Ausführungsbeispiel gezeigt, jedoch in einer anderen perspektivischen Darstellung. Im Gegensatz zu der Beölungsrinne nach Figur 3 besteht der Grundkörper der Beölungsrinne aus einem nicht magnetisierbaren Material, aber weist im Bereich der Taschen 14 eine Beschichtung 23 in Form eines Anstriches auf, der an den Bodenflächen und Seitenflächen der Taschen 14 aufgetragen wurde, was einerseits durch die gestrichelte Linie 21, andererseits durch die Schraffur 22 veranschaulicht ist. Dieser Anstrich kann entweder bereits magnetisiert aufgetragen werden, oder bevorzugt nach dem Auftragen magnetisiert werden. Je nach Bedarf können alle Taschen, oder nur einzelne Taschen, wie in Figur 4 dargestellt, mit dem magnetisierten Anstrich versehen sein.

In den Figuren 5 und 6 ist ein weiteres Ausführungsbeispiel dargestellt, nämlich in Figur 5 in einer perspektivischen Seitenansicht, und in Figur 6 in einer perspektivischen Draufsicht. In Abwandlung zu der Darstellung gemäß Figur 3 und 4 ist die ölaustrittsseitige Bodenfläche nicht als eine zur Längsachse 13 senkrechte Wand ausgebildet, sondern schließt einen stumpfen Winkel kleiner 90 Grad mit der Längsachse ein. Dieser Winkel ist in der Zeichnung mit dem Pfeil 24 veranschaulicht.

Gut zu erkennen ist auch die U-Form der Rillen 19 in der perspektivischen Draufsicht gemäß Figur 6, sowie der sanftere Verlauf der Bodenfläche 15 auf der Öleintrittsseite im Vergleich zur Ölaustrittsseite, was das Einleiten von Partikeln in die Taschen 14 erleichtert, aber das Herausspülen aus diesem Taschen 14 hemmt, wozu auch die in Rillen 19 bevorzugt verdichtet an der Ölaustrittsseite anordnet sind, obgleich diese selbstverständlich über die gesamte Beölungsrinne verteilt angeordnet sein können, das heißt ebenfalls in dem Strömungsleitabschnitt 7. Der sanftere Öleinlauf ist durch den vergleichsweise spitzeren Winkel gekennzeichnet, welcher durch den Pfeil 25 angedeutet ist.

## Patentansprüche

1. Beölungsrinne für ein Getriebe, mit wenigstens einem Ablauf (5), sowie einem Strömungsleitabschnitt (7), welcher dem Ablauf (5) Getriebeöl zuführt, **dadurch gekennzeichnet, daß** die Beölungsrinne (3) keinen separaten Magneten aufweist, aber zumindest teilweise aus magnetisiertem Material besteht.

2. Beölungsrinne nach Anspruch 1, **dadurch gekennzeichnet, daß** die Beölungsrinne (3) aus mit magnetisierbaren Partikeln durchsetztem Kunststoff hergestellt ist.

3. Beölungsrinne nach Anspruch 2, **dadurch gekennzeichnet, daß** die Beölungsrinne (3) im Spritzgießverfahren hergestellt und nach dem Giessen magnetisiert wurde.

4. Beölungsrinne nach Anspruch 1, **dadurch gekennzeichnet, daß** die Beölungsrinne (3) einen nichtmagnetischen Grundkörper aufweist, welcher mit einer magnetisierten Beschichtung versehen ist.

5. Beölungsrinne nach Anspruch 1, **dadurch gekennzeichnet, daß** die Beölungsrinne (3) aus magnetisiertem Metall besteht.

6. Beölungsrinne nach einem der vorangehenden Ansprüche, **dadurch gekennzeichnet, daß** die Beölungsrinne (3) mit sich zumindest teilweise quer zur Strömungsrichtung (12) erstreckenden Rillen (8) versehen ist, welche zum Ablagern von nichtmetallischen Partikeln ausgebildet sind.

7. Beölungsrinne nach einem der vorangehenden Ansprüche, **dadurch gekennzeichnet, daß** die Beölungsrinne (3) mit wenigstens einer Tasche (14) versehen ist, welche zum Ablagern von Partikeln ausgebildet ist.

8. Beölungsrinne nach Anspruch 7, **dadurch gekennzeichnet, daß** die Tasche (14) mit sich zumindest teilweise quer zur Strömungsrichtung (12) erstreckenden Rillen (19) versehen ist, welche zum Ablagern von nichtmetallischen Partikeln ausgebildet sind.

9. Beölungsrinne nach einem der Ansprüche 7 oder 8, **dadurch gekennzeichnet, daß** die Beölungsrinne (3) eine sich im Wesentlichen parallel zur einer Hauptstromrichtung des Öls entlang des Strömungsleitabschnitts (7) erstreckende Längsachse aufweist, und die Taschen (14) eine Bodenfläche (15) aufweisen, welche sich ausgehend von einer Öleintrittsseite (16) in einem spitzen Winkel (25) relativ zu der Längsachse (13) erstreckt, und an einer Ölaustrittsseite (17) in einem stumpfen Winkel (24) zur Längsachse (13) erstreckt.

10. Beölungsrinne nach Anspruch 9, **dadurch gekennzeichnet, daß** sich die Bodenfläche (15) an der Ölaustrittsseite im Wesentlichen senkrecht zur Längsachse (13) erstreckt und damit zu einer senkrechten Wand wird, und die Bodenfläche (15) zwischen der Öleintrittsseite (16) und Ölaustrittsseite (17) einen Bodenabschnitt (18) aufweist, welcher sich im Wesentlichen parallel zu der Längsachse (13) erstreckt.

11. Beölungsrinne nach Anspruch 9 oder 10, **dadurch gekennzeichnet, daß** sich an Seiten der Bodenfläche (15) Seitenwände (20) anschließen, welche sich im Wesentlichen senkrecht zur Längsachse (13) erstrecken.

12. Beölungsrinne nach Anspruch 11, **dadurch gekennzeichnet, daß** sich in Einbaulage der Beölungsrinne (3) die Seitenwände (20) im Wesentlichen vertikal erstrecken, und der Bodenabschnitt (18) im Wesentlichen horizontal erstreckt.

13. Kraftfahrzeuggetriebe mit einer Beölungsrinne (3) nach einem der Ansprüche 1 bis 12.

14. Verfahren zur Herstellung einer Beölungsrinne mit den Verfahrensschritten:
Bereitstellen eines Kunststoffmaterials;
Bereitstellen von magnetisierbaren Partikeln;
Vermischen des Kunststoffmaterials und der magnetisierbaren Partikel zu einem spritzgießfähigen Gemisch;
Spritzgießen der Beölungsrinne aus dem Gemisch;
Magnetisieren der Beölungsrinne.

15. Verfahren zur Herstellung einer Beölungsrinne mit den Verfahrensschritten:
Herstellung eines Grundkörpers der Beölungsrinne aus einem nicht-magnetisierbaren Material;
Beschichteten von wenigstens Teilen der Beölungsrinne mit einem magnetisierbaren Material;
Magnetisieren des magnetisierbaren Materials.

## Claims

1. Oiling channel for a gearbox, having at least one outlet (5) and having a flow-guiding portion (7) which supplies gearbox oil to the outlet (5), **characterized in that** the oiling channel (3) does not have a separate magnet but is composed at least partially of magnetized material.

2. Oiling channel according to Claim 1, **characterized in that** the oiling channel (3) is produced from plastic interspersed with magnetizable particles.

3. Oiling channel according to Claim 2, **characterized in that** the oiling channel (3) was produced in an injection moulding process and was magnetized after the moulding.

4. Oiling channel according to Claim 1, **characterized in that** the oiling channel (3) has a non-magnetic basic body which is provided with a magnetized coating.

5. Oiling channel according to Claim 1, **characterized in that** the oiling channel (3) is composed of magnetized metal.

6. Oiling channel according to one of the preceding claims, **characterized in that** the oiling channel (3) is provided with grooves (8) which extend at least partially transversely with respect to the flow direction (12) and which are designed for the deposition of non-metallic particles.

7. Oiling channel according to one of the preceding claims, **characterized in that** the oiling channel (3) is provided with at least one pocket (14) which is designed for the deposition of particles.

8. Oiling channel according to Claim 7, **characterized in that** the pocket (14) is provided with grooves (19) which extend at least partially transversely with respect to the flow direction (12) and which are designed for the deposition of non-metallic particles.

9. Oiling channel according to either of Claims 7 and 8, **characterized in that** the oiling channel (3) has a longitudinal axis extending substantially parallel to a main flow direction of the oil along the flow-guiding portion (7), and the pockets (14) have a base surface (15) which, proceeding from an oil entry side (16), extends at an acute angle (25) relative to the longitudinal axis (13), and which, at an oil exit side (17), extends at an obtuse angle (24) with respect to the longitudinal axis (13).

10. Oiling channel according to Claim 9, **characterized in that**, at the oil exit side, the base surface (15) extends substantially perpendicularly with respect to the longitudinal axis (13) and thereby forms a perpendicular wall, and between the oil entry side (16) and the oil exit side (17), the base surface (15) has a base portion (18) which extends substantially parallel to the longitudinal axis (13).

11. Oiling channel according to Claim 9 or 10, **characterized in that** sides of the base surface (15) are adjoined by side walls (20) which extend substantially perpendicularly with respect to the longitudinal axis (13).

12. Oiling channel according to Claim 11, **characterized in that**, in the installed position of the oiling channel (3), the side walls (20) extend substantially vertically and the base portion (18) extends substantially horizontally.

13. Motor vehicle gearbox having an oiling channel (3) according to one of Claims 1 to 12.

14. Method for producing an oiling channel having the method steps:
providing a plastic material;
providing magnetizable particles;
mixing the plastic material and the magnetizable particles to form a mixture that can be injection-moulded;
injection moulding the oiling channel from the mixture;
magnetizing the oiling channel.

15. Method for producing an oiling channel having the method steps:
producing a basic body of the oiling channel from a non-magnetizable material;
coating at least parts of the oiling channel with a magnetizable material;
magnetizing the magnetizable material.

## Revendications

1. Gorge de lubrification pour boîte de vitesses, qui présente au moins un orifice de sortie (5) ainsi qu'une partie de guidage d'écoulement (7) qui amène de l'huile de boîte de vitesses à l'orifice de sortie (5),
**caractérisée en ce que**
la gorge de lubrification (3) ne présente pas d'aimant séparé mais est constituée au moins en partie d'un matériau magnétisable.

2. Gorge de lubrification selon la revendication 1, **caractérisée en ce que** la gorge de lubrification (3) est réalisée en matière synthétique chargée de particules magnétisables.

3. Gorge de lubrification selon la revendication 2, **caractérisée en ce que** la gorge de lubrification (3) est réalisée par un procédé de moulage par injection et est magnétisée après le moulage.

4. Gorge de lubrification selon la revendication 1, **caractérisée en ce que** la gorge de lubrification (3) présente un corps de base non magnétique doté d'un revêtement magnétisé.

5. Gorge de lubrification selon la revendication 1, **caractérisée en ce que** la gorge de lubrification (3) est constituée d'un matériau magnétisé.

6. Gorge de lubrification selon l'une des revendications précédentes, **caractérisée en ce que** la gorge de lubrification (3) est dotée de rainures (8) qui s'étendent au moins en partie dans une direction transversale à la direction d'écoulement (12) et qui sont configurées pour permettre le dépôt de particules non métalliques.

7. Gorge de lubrification selon l'une des revendications précédentes, **caractérisée en ce que** la gorge de lubrification (3) est dotée d'au moins une poche (14) configurée pour permettre le dépôt de particules.

8. Gorge de lubrification selon la revendication 7, **caractérisée en ce que** la poche (14) est dotée de rainures (19) qui s'étendent au moins en partie dans une direction transversale par rapport à la direction d'écoulement (12) et qui sont configurées pour permettre le dépôt de particules non métalliques.

9. Gorge de lubrification selon l'une des revendications 7 ou 8, **caractérisée en ce que** la gorge de lubrification (3) présente un axe longitudinal qui s'étend essentiellement en parallèle à une direction principale d'écoulement de l'huile le long de la partie (7) de guidage d'écoulement, les poches (14) présentant une surface de fond (15) qui, partant d'un côté (16) d'entrée d'huile, s'étend sous un angle aigu (25) par rapport à l'axe longitudinal (13) et sous un angle obtus (24) par rapport à l'axe longitudinal (13) sur un côté de sortie (17) de l'huile.

10. Gorge de lubrification selon la revendication 9, **caractérisée en ce que** la surface de fond (15) s'étend essentiellement à la perpendiculaire de l'axe longitudinal (13) sur le côté de sortie de l'huile et forme ainsi une paroi perpendiculaire, la surface de fond (15) présentant entre le côté (16) d'entrée d'huile et le côté (17) de sortie d'huile une partie de fond (18) qui s'étend essentiellement en parallèle à l'axe longitudinal (13).

11. Gorge de lubrification selon les revendications 9 ou 10, **caractérisée en ce que** des parois latérales (20) qui s'étendent essentiellement à la perpendiculaire de l'axe longitudinal (13) se raccordent aux côtés de la surface de fond (15).

12. Gorge de lubrification selon la revendication 11, **caractérisée en ce que** lorsque la gorge de lubrification (3) est en position montée, les parois latérales (20) s'étendent essentiellement à la verticale, la partie de fond (18) s'étendant essentiellement à l'horizontale.

13. Boîte de vitesses pour véhicule automobile dotée d'une gorge de lubrification (3) selon l'une des revendications 1 à 12.

14. Procédé de fabrication d'une gorge de lubrification, le procédé présentant les étapes suivantes :
prévoir une matière synthétique,
prévoir des particules magnétisables,
mélanger la matière synthétique et les particules magnétisables pour former un mélange apte à être moulé par injection,
mouler le mélange pour former la gorge de lubrification et
magnétiser la gorge de lubrification.

15. Procédé de fabrication d'une gorge de lubrification, le procédé présentant les étapes suivantes :
fabriquer le corps de base de la gorge de lubrification en un matériau non magnétisable,
revêtir au moins certaines parties de la gorge de lubrification par un matériau magnétisable et
magnétiser le matériau magnétisable.
